# EUROPÄISCHE PATENTANMELDUNG

(11) **EP 1 267 520 A2**
(43) Veröffentlichungstag der Anmeldung: **18.12.2002**
(21) Anmeldenummer: 02012931.8
(22) Anmeldetag: 11.06.2002
(51) Int. Cl.: H04L 12/24

(54) **Verfahren und Servicesystem zur Betreuung eines an ein Telekommunikations-bzw. Datennetz angeschlossenen Objektes**

(30) Priorität: 11.06.2001 DE 10128178
(71) Anmelder: Tenovis GmbH & Co. KG, 60326 Frankfurt (DE)
(72) Erfinder: Wollenhaupt, Thomas, 65199 Wiesbaden (DE); Fröhlich, Eric, 63150 Heusenstamm (DE)
(74) Vertreter: Heinze, Ekkehard, Dipl.-Phys. Dr.

(57) **Zusammenfassung**

Verfahren zur Betreuung eines an ein Telekommunikations- bzw. Datennetz angeschlossenen Objektes, insbesondere zum Konfigurieren eines Telekommunikations- oder Datenendgerätes bzw. einer Telekommunikations- oder Datenverarbeitungsanlage oder zum Eingeben oder Ändern von Daten oder Programmen, durch eine ebenfalls an das Telekommunikations- bzw. Datennetz angeschlossene Servicestelle unter Mitwirkung einer Servicezentrale, in der Daten zum Objekt und zum Betreuungsvorgang verwaltet und/oder bearbeitet werden, wobei die Servicestelle und die Servicezentrale während der Verfahrensdurchführung über das Telekommunikations- bzw. Datennetz mit dem Objekt verbunden sind.

## Beschreibung

Die Erfindung betrifft ein Betreuungsverfahren für an ein Telekommunikations- bzw. Datennetz angeschlossene Objekte (TK- oder Datenendgeräte bzw. TK-Anlagen oder Datenverarbeitungsanlagen, beispielsweise Server) nach dem Oberbegriff des Anspruchs 1 bzw. ein Servicesystem nach dem Oberbegriff des Anspruchs 10.

Unter dem Begriff Betreuung werden nachfolgend allgemein verschiedene Arten von Konfigurierungs-, Daten- oder Programmaktualisierungs- oder sonstige Wartungsarbeiten verstanden, die bei Geräten oder Anlagen der genannten Art über ein TK- oder Datennetz von einer entfernt gelegenen Servicestelle aus durchgeführt werden können. Hierzu gehört insbesondere auch das Ändern von Kundendaten bzw. kundenspezifischen Einstellungen oder Software-Updates von Endgeräten oder Anlagen beim Kunden durch den Hersteller oder eine Servicefirma.

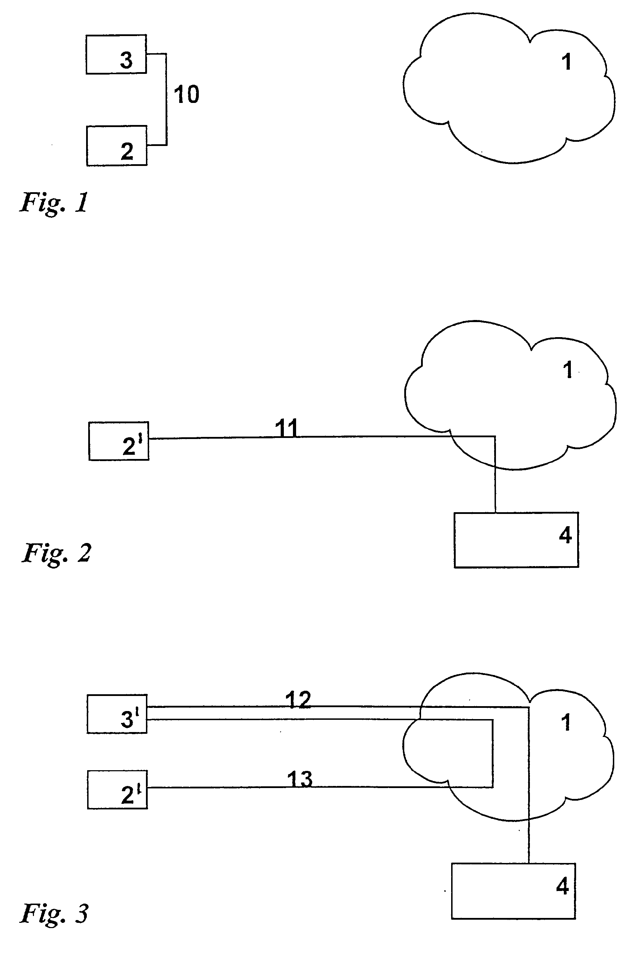

Zur Realisierung derartiger Betreuungsaufgaben sind verschiedene Konfigurationen bekannt, die nachfolgend unter Bezugnahme auf die Figuren 1 bis 3 kurz dargestellt werden.

Bei der in Fig. 1 dargestellten "klassischen" Variante wird ein nicht an ein vorhandenes TK- bzw. Datennetz 1 angeschlossenes Objekt 2 von einer Servicestelle 3 aus über eine direkte Verbindung 10 zwischen beiden betreut. Das Objekt 2 und die Servicestelle 3 verfügen über Standard-Computerschnittstellen, wie beispielsweise V.24 oder Parallelport, oder systemspezifische Schnittstellen. Handelt es sich bei dem Objekt speziell um ein TK-Endgerät oder eine TK-Anlage, können die Schnittstellen auch als Modems oder - bei digitalen Geräten - S₀- oder Uk₀-Schnittstellen sein.

Da eine Servicestelle natürlich zur Betreuung einer Mehrzahl von Objekten - vielfach einer sehr großen Anzahl von Objekten - dient, müssen die Servicestellen bei dieser Systemkonfiguration große Objektdatenmengen speichern und natürlich entsprechende Speicher- und Speicherverwaltungskapazitäten vorhalten. Neben den hohen Kosten ist hierbei die Gefahr eines Verlustes großer, wertvoller Datenbestände bei einem Ausfall des Speichers oder der ganzen Servicestelle von Nachteil. Zudem unterscheiden sich die durch eine Servicestelle zu betreuenden Objekte in der Regel, bedingt durch unterschiedliche Typen und Herstellungsjahre, in einer Weise, die den Einsatz unterschiedlicher Serviceprogramme erfordert. Die Servicestelle muß daher auch eine Anzahl von Serviceprogrammen vorhalten, was neben einer hohen Datenspeicherkapazität auch eine hohe Programmspeicherkapazität erfordert und die Gestehungskosten weiter in die Höhe treibt.

In einer weiteren bekannten Systemkonfiguration - hier in Fig. 2 dargestellt - wird ein an das TK- bzw. Datennetz 1 angeschlossenes Objekt 2' über eine Netzverbindung 11 durch eine zentrale Serviceeinheit (nachfolgend auch als Servicezentrale bezeichnet) betreut. Bei dem TK- bzw. Datennetz 1 handelt es sich um ein durchschaltevermitteltes analoges oder digitales Telekommunikationsnetz (Line Switched Network) oder ein paketvermitteltes Kommunikationsnetz (Packet Switched Network), etwa das Internet oder ein Mobilfunknetz. In Abhängigkeit von der konkreten Ausbildung des Netzes können Schnittstellen der oben erwähnten Art zum Einsatz kommen.

Ein wesentlicher Vorteil dieser Systemkonfiguration besteht in der Möglichkeit einer zentralen Verwaltung und Pflege der Kundendaten, jedoch leidet dieses System unter den üblichen Nachteilen streng zentralisierter Verwaltungs- und Betreuungssysteme. Hierzu gehört insbesondere mangelnde Flexibilität hinsichtlich der Beauftragung verschiedener Servicefirmen und mangelnde Kundennähe.

Schließlich ist auch eine Konfiguration eines Betreuungssystems bekannt, wie sie in Fig. 3 dargestellt ist und bei der (dezentralen) Servicestelle 3' mit einer Servicezentrale 4 zusammenwirken. Die Servicestelle 3' betreut das Objekt 2', indem sie zunächst eine Verbindung 12 über das Netz 1 zur Servicezentrale 4 aufbaut und die betreuungsrelevanten Daten (beispielsweise Objektstatus, Berechtigungen, Kodierungsschlüssel, Update-Files etc.) über diese Verbindung von der Servicezentrale 4 herunterlädt und zwischenspeichert. Dann baut sie über das Netz 1 eine eigene Verbindung 13 zu dem Objekt 2' auf und führt über diese Verbindung den Betreuungsablauf durch.

Hierbei können Änderungen der relevanten Objektdaten mindestens teilweise von der Servicezentrale vorbereitet und in einem Objektdatenspeicher ("Kundenspeicher") abgelegt werden. Umgekehrt kann der aktuellste Datenstatus nach Abschluß des Betreuungsvorganges von der Servicestelle 3' an die Servicezentrale 4 zur zentralen Speicherung übertragen werden. Es ist also bei dieser Ausführung mit einer zentralen Kundendatenverwaltung - einschließlich Aktualisierung - sichergestellt, daß verschiedene Servicestellen, die Betreuungsvorgänge am Objekt 2' ausführen, auf die jeweils aktuellsten Daten zugreifen können. Ein Vorteil dieser Konfiguration besteht auch darin, daß die Servicestellen Serviceprogramme für das zu betreuende Objekt aus der Servicezentrale beziehen können, also nicht selbst eine Mehrzahl von Serviceprogrammen speichern müssen.

Jedoch läuft das eigentliche Betreuungsverfahren nicht unter der Kontrolle der Servicezentrale ab, so daß beispielsweise im Falle von Änderungen von Authentisierungscodes in der Kommunikation einer Servicestelle mit dem Objekt andere Servicestellen nicht mehr auf das Objekt zugreifen können. Desweiteren ist eine aktuelle zentrale Dokumentation von durchgeführten Betreuungsvorgängen mit relativ hohem Aufwand verbunden.

Der Erfindung liegt daher die Aufgabe zugrunde, ein verbessertes Verfahren und System der gattungsgemäßen Art bereitzustellen, die eine effiziente und flexible Ausführung von Betreuungsvorgängen, einschließlich des zugehörigen Datenverkehrs und der Protokollierung, ermöglichen.

Diese Aufgabe wird in ihrem Verfahrensaspekt durch ein Verfahren mit den Merkmalen des Anspruchs 1 und in ihrem Vorrichtungsaspekt durch ein Servicesystem mit den Merkmalen des Anspruchs 10 gelöst.

Die Erfindung schließt den grundlegenden Gedanken ein, eine Servicezentrale rationell in durch einzelne Servicestellen ausgeführte Betreuungsvorgänge einzubinden, wobei die Vorteile einer zentralen Datenverwaltung und -pflege mit den Vorteilen einer dezentralen Organisation konkreter Betreuungsvorgänge verbunden werden. Weiter schließt die Erfindung den Gedanken ein, die hierzu notwendigen Verbindung über ein TK- bzw. Datennetz herzustellen, an das sowohl die zu betreuenden Objekte als auch die Servicestellen und die Servicezentrale angeschlossen sind.

In einer bevorzugten Verfahrensführung baut die einen Betreuungsvorgang ausführende Servicestelle über das Netz zunächst eine Verbindung mindestens zu der Servicezentrale auf und überträgt nach gelungenem Verbindungsaufbau Kenndaten zur Identifizierung des Objektes bzw. zur Realisierung eines Zugriffs auf dieses an die Servicezentrale. Diese baut anhand der empfangenen Kenndaten eine Verbindung zu dem Objekt auf.

In einer ersten zweckmäßigen Ausgestaltung baut die Servicestelle parallel eine eigene Verbindung zu dem Objekt auf, und beide Verbindungen bestehen während des Betreuungsvorganges parallel zueinander. Hierbei kann die Verbindung zwischen der Servicestelle und der Servicezentrale zwischenzeitlich wieder unterbrochen werden. In einer anderen zweckmäßigen Ausführung wirkt die Servicezentrale als Vermittlungsstelle, so daß die Servicestelle keine eigene Verbindung zum Objekt aufbaut.

Es versteht sich, daß bei einer praktisch realisierten Systemkonfiguration in der Regel mehrere Servicestellen über das Netz gleichzeitig mit mehreren Objekten verbunden sein werden. Es ist auch möglich, daß mehrere Servicestellen gleichzeitig mit ein und demselben Objekt verbunden sind, um an diesem unterschiedliche Betreuungsaufgaben auszuführen. Auch dies kann unter Nutzung der Servicezentrale als Vermittlungsstelle geschehen.

Der Verbindungsaufbau zwischen der Servicezentrale und dem Objekt wird in einer bevorzugten Verfahrensführung erst nach Prüfung von Identifikations- und wahlweise auch Authentisierungsdaten aufgebaut, die von der anfragenden Servicestelle übermittelt worden und mit gespeicherten Identifikations- bzw. Authentisierungsdaten berechtigter Servicestellen verglichen werden. Hierdurch wird sichergestellt, daß Betreuungsaufgaben jeweils nur durch aktuell autorisierte Servicestellen ausgeführt werden können, was der Qualitätssicherung insbesondere dann zugute kommt, wenn in das Servicesystem Servicestellen verschiedener Firmen und/oder mit unterschiedlichen Kompetenzen eingebunden sind.

In einer weiteren zweckmäßigen Ausführung übernimmt die Servicezentrale insbesondere Aufgaben der Datenverschlüsselung im Datenverkehr zwischen den Servicestellen und den Objekten und/oder der Protokollierung von Betreuungsvorgängen und weist hierzu geeignete (kryptografische) Kodier-/Dekodiereinrichtungen (Codecs) bzw. Protokollierungseinrichtungen und Protokolldatenspeicher auf.

Besonders zweckmäßig ist das Vorsehen einer zentralen Objektdatenbasis in bzw. bei der Servicezentrale, in der alle Objektdaten (Kundendaten) des Betreuungssystems zentral und unter Implementierung aller einer zentralen Datenhaltung möglichen Sicherungsmechanismen gespeichert und auch zentral aktualisiert werden.

Das vorgeschlagene Verfahren und Servicesystem hat deutlich erkennbare Vorteile insbesondere in den letztgenannten Ausführungsformen: Neben dem Umstand, daß auf den Verbindungen zwischen der Servicestelle und der Servicezentrale einerseits und der Servicezentrale und dem Objekt andererseits verschiedene Verschlüsselungs- und Datensicherungsmechanismen angewandt werden können, die zudem leicht änderbar sind, ist von Vorteil insbesondere die zentrale Zugangskontrolle zu den Objekten und die Möglichkeit einer zentralen Protokollierung aller Betreuungsvorgänge. Vorteilhaft ist auch die Möglichkeit einer zentralen Pflege der Kundendaten, Verschlüsselungsinstrumente und Zugriffsberechtigungen o. ä.

Es ist darauf hinzuweisen, daß zu den oben angesprochenen Verfahrensaspekten auch Vorrichtungsaspekte des Servicesystems korrespondieren. Diese sind für den Fachmann aus den Verfahrensaspekten leicht ableitbar, so daß diese hier - soweit nicht entsprechende Vorrichtungsaspekte bereits explizit genannt wurden - nicht nochmals separat aufgeführt werden.

Es soll indes darauf hingewiesen werden, daß die Servicezentrale in einer bevorzugten Systemkonfiguration mehrere (insbesondere sämtliche technisch sinnvollen) Standard-Schnittstellen zur Verbindung mit Objekten verschiedenen Typs aufweist. Hierzu zählen neben Modems für analoge und beispielsweise ISDN-Karten für digitale durchschaltvermittelte Verbindungen die üblichen Interfaces für paketvermittelte Daten- oder Mobilfunkverbindungen.

Weiterhin wird darauf hingewiesen, daß die Servicezentrale zur Realisierung der Objekterkennung einerseits und Authentisierungsprüfung der Servicestellen andererseits entsprechende Objekt- bzw. Servicestellen-Kenndatenspeicher und Prüfstufen zur Prüfung der Kenndaten aufweist, die mit einer Steuereinrichtung zur Steuerung eines Verbindungsaufbaus zu den zu betreuenden Objekten verbunden sind.

In den Servicestellen ist vorzugsweise eine standardisierte, insbesondere interaktive, Benutzeroberfläche implementiert, über die der Servicetechniker auf ein Servicewerkzeug (Servicetool) zugreift, welches seinerseits eine Mehrzahl spezifischer Betreuungswerkzeuge (Betreuungstools) handhabt. Diese Betreuungstools können im übrigen bedarfsweise von der Servicezentrale angefordert und heruntergeladen werden, oder sie sind in der Servicestelle zwar gespeichert, es kann aber im Bedarfsfall eine Aktualisierung seitens der Servicezentrale vorgenommen werden.

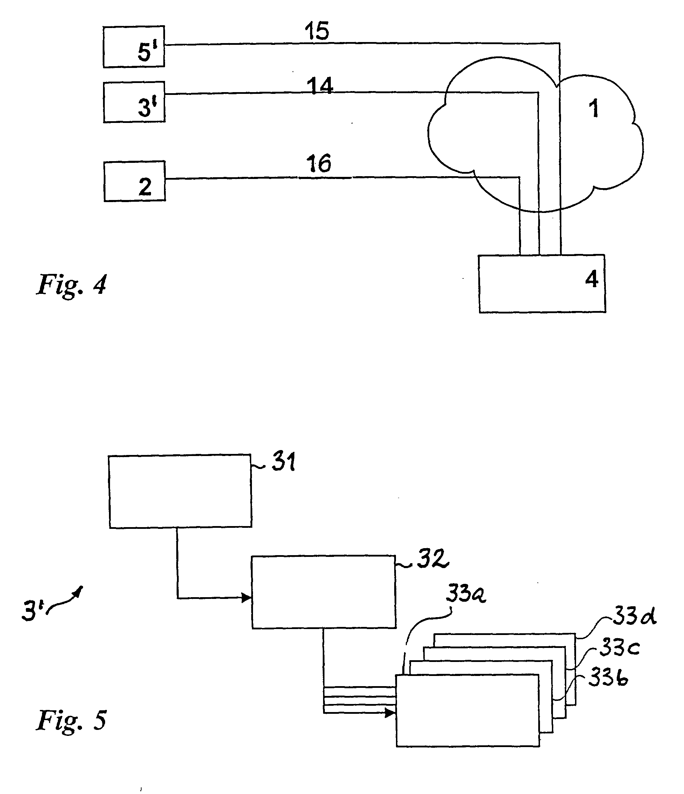

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren 4, 5 und 6.

Fig. 4 zeigt in einer an die Figuren 1 bis 3 angelehnten schematischen Darstellung ein erfindungsgemäßes Servicesystem aus einem TK- bzw. Datennetz 1, einem an dieses angeschlossen, betreuten Objekt 2', zwei ebenfalls an das Netz 1 angeschlossenen Servicestellen 3' und 5' und einer Servicezentrale 4. Die Servicestellen 3' und 5' sind über Datenverbindungen 14, 15 mit der Servicezentrale 4 verbunden, und diese ist ihrerseits über eine Datenverbindung 16 mit dem Objekt 2' verbunden.

Die Servicestellen 3' und 5' starten den Betreuungsvorgang, indem sie zunächst Verbindungen 14 bzw. 15 über das Netz 1 zur Servicezentrale 4 aufbauen, sich durch Übermittlung entsprechender Datensätze identifizieren und authentisieren und einen Kenndatensatz des Objektes 2' übertragen. In der Servicezentrale 4 werden diese Daten geprüft, und im Ergebnis einer positiven Prüfung wird die Verbindung 16 aufgebaut, woraufhin eine direkte Betreuung des Objektes über die - als Vermittlungsstelle wirkende - Servicezentrale 4 durch die Servicestellen 3' und 5' möglich ist, um beispielsweise kundenspezifische Daten zu ändern oder Software-Updates auszuführen.

In der praktischen Ausführung können die Servicestellen beispielsweise Laptops von Servicetechnikern, die Objekte Nebenstellenanlagen eines bestimmten Herstellers und die Servicezentrale aus einem Serververbund dieses Herstellers gebildet sein, zu dem ein SQL-Server zur Verwaltung der Objektdaten gehört. Das Netz ist dann insbesondere durch Verknüpfung eines öffentlichen Festnetzes mit einem Intranet - unter Einschaltung entsprechender Firewalls zur Gewährleistung der Daten- und Programmsicherheit - gebildet.

Fig. 5 zeigt in einer Prinzipskizze, wie in einer Servicestelle 3' unter einem Internet-Browser 31 als einheitliche Benutzeroberfläche zu Beginn eines Betreuungsvorganges automatisch ein Servicewerkzeug 32 gestartet wird, welches wiederum hierarchisch spezifischen Betreuungstools 33a bis 33d übergeordnet ist und diese für die Objektbetreuung startet. Die Betreuungstools können jeweils nach Aufbau einer Verbindung objektindividuell von der Servicezentrale aus übertragen oder auch nur aktualisiert werden, und das Servicewerkzeug (Servicetool) ist dazu ausgebildet, vom Objekt empfangene bzw. im Rahmen des Betreuungsverfahrens geänderte Objektdaten zur Speicherung/Sicherung automatisch an die Serviceeinheit zu übermitteln.

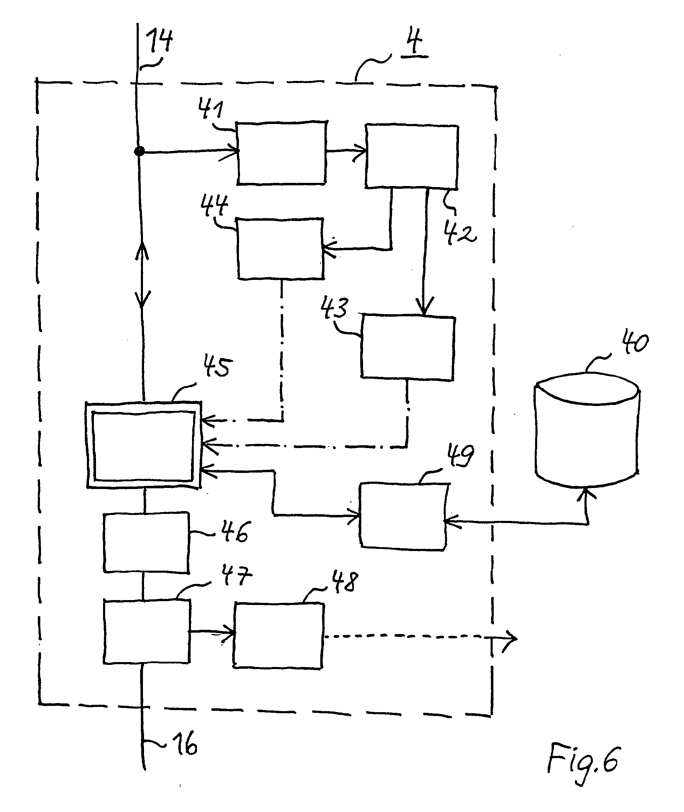

In Fig. 6 ist in Art eines Funktions-Blockschaltbildes der im Zusammenhang mit der Ausführung der Erfindung wesentliche Teil einer Servicezentrale 4 eines Servicesystems der in Fig. 4 dargestellten Art gezeigt. Die Servicezentrale 4 ist mit einer Objektdatenbasis 40 verbunden, die beispielsweise auf einem SQL-Server läuft. Über eine Empfangseinheit 41 ist sie eingangsseitig mit der Verbindungsleitung 14 zu der Servicestelle 3' (Fig. 4) verbunden.

Der Empfangseinheit 41 ist ein Kenndatendecoder 42 nachgeschaltet, der einen von der Servicestelle 3' übermittelten Kenndatensatz dekodiert und einen Objekt-Kenndatensatz einer Objektkennungs-Prüfstufe 43 und einen Servicestellen-Kenndatensatz, der Identifizierungs- und Authentisierungsdaten der Servicestelle umfaßt, einer Autorisierungs-Prüfstufe 44 zuführt. Die Ausgänge beider Prüfstufen 43, 44 sind mit Steuereingängen einer Vermittlungssteuereinrichtung 45 verbunden, welche über eine Codec-Stufe 46 und eine Protokollierungsstufe 47, welche ihrerseits mit einem Protokolldatenspeicher 48 verbunden ist, mit der Verbindungsleitung 16 zum Objekt 2 (Fig. 4) verbunden ist. Der Vermittlungssteuereinrichtung 45 ist eine Objektdaten-Verarbeitungsstufe 49 zugeordnet, welche die Servicezentrale 4 mit der Objektdatenbasis 40 verbindet und den Abruf von Daten aus dieser sowie die Aktualisierung von Datenbeständen in dieser während eines Betreuungsvorganges steuert.

Wie weiter oben bereits angesprochen, baut die Servicestelle 3' zunächst über die Leitung 14 eine Verbindung zur Servicezentrale 4 auf und übermittelt den erwähnten Kenndatensatz, der im Kenndatendecoder in Objektkenndaten und Servicestellen-Kenndaten separiert wird, welche den Prüfstufen 43, 44 zugeführt und dort anhand gespeicherter Referenzdaten geprüft werden. Bei positivem Prüfungsergebnis erhält die Vermittlungssteuereinrichtung 45 ein entsprechendes Ausgangssignal der Prüfstufen und vermittelt eine Verbindung zwischen der Servicestelle 3' und dem zu betreuenden Objekt 2 und aktiviert zugleich die Codec-Stufe 46 und die Protokollierungsstufe 47 zur Verschlüsselung und Protokollierung des gesamten nachfolgenden Datenverkehrs und die Objektdaten-Verarbeitungsstufe 49 zur Bereitstellung eines für den Betreuungsvorgang in jedem Fall benötigten Basisobjektdatensatzes. Sofern im Verfahrensablauf weitere Objektdaten benötigt werden, werden diese aufgrund eines entsprechenden Anforderungssignals von der Servicestelle 3' über die Objektdaten-Verarbeitungsstufe 49 aus der Objektdatenbasis 40 geholt und während oder nach Abschluß des Betreuungsvorganges werden gegebenenfalls aktualisierte Objektdaten wiederum dort abgelegt.

Die Ausführung der Erfindung ist nicht auf das beschriebene Beispiel und die oben hervorgehobenen Aspekte beschränkt, sondern im Rahmen der Ansprüche ebenso in einer Vielzahl von Abwandlungen möglich, die im Rahmen fachgemäßen Handelns liegen.

### Bezugszeichenliste

- 1: Telekommunikations- bzw. Datennetz
- 2; 2': Objekt
- 3; 3', 5': Servicestelle
- 4: Servicezentrale
- 10; 11; 12, 13; 14, 15, 16: Verbindung
- 31: Internetbrowser
- 32: Servicewerkzeug (Servicetool)
- 33a - 33d: Betreuungswerkzeug (Betreuungstool)
- 40: Objektdatenbasis
- 41: Empfangseinheit
- 42: Kenndatendecoder
- 43: Objektkennungs-Prüfstufe
- 44: Autorisierungs-Prüfstufe
- 45: Vermittlungssteuereinrichtung
- 46: Codec-Stufe
- 47: Protokollierungsstufe
- 48: Protokolldatenspeicher
- 49: Objektdaten-Verarbeitungsstufe

## Patentansprüche

1. Verfahren zur Betreuung eines an ein Telekommunikations- bzw. Datennetz (1) angeschlossenen Objektes (2; 2'), insbesondere zum Konfigurieren eines Telekommunikationsoder Datenendgerätes bzw. einer Telekommunikations- oder Datenverarbeitungsanlage oder zum Eingeben oder Ändern von Daten oder Programmen, durch eine ebenfalls an das Telekommunikations- bzw. Datennetz angeschlossene Servicestelle (3', 5') unter Mitwirkung einer Servicezentrale (4), in der Daten zum Objekt und zum Betreuungsvorgang verwaltet und/oder bearbeitet werden,
**dadurch gekennzeichnet, daß**
die Servicestelle und die Servicezentrale während der Verfahrensdurchführung über das Telekommunikations- bzw. Datennetz mit dem Objekt verbunden sind.

2. Verfahren nach Anspruch 1,
**dadurch gekennzeichnet, daß**
die Servicestelle (3', 5') über das Telekommunikations- bzw. Datennetz (1) eine Verbindung mindestens zu der Servicezentrale (4) aufbaut,
die Servicestelle nach Aufbau der Verbindung zur Servicezentrale an diese Kenndaten des Objekts überträgt und anschließend die Servicezentrale aufgrund der Kenndaten eine Verbindung zum Objekt (2) aufbaut.

3. Verfahren nach Anspruch 1 oder 2,
**dadurch gekennzeichnet, daß**
die Servicestelle (3', 5') über die als Vermittlung wirkende Servicezentrale (4) mit dem Objekt (2) verbunden bleibt.

4. Verfahren nach einem der vorangehenden Ansprüche,
**dadurch gekennzeichnet, daß** mehrere Servicestellen (3', 5') gleichzeitig, insbesondere über die Servicezentrale (4) als Vermittlungsstelle, mit dem Objekt (2) verbunden sind.

5. Verfahren nach Anspruch 1, 2 oder 4,
**dadurch gekennzeichnet, daß**
die Servicestelle (3', 5') und die Servicezentrale (4) voneinander unabhängige Verbindungen (14 - 16) zum Objekt (2) aufbauen und während der Verfahrensdurchführung halten.

6. Verfahren nach Anspruch 2, 4 oder 5,
**dadurch gekennzeichnet, daß**
die Servicestelle (3', 5') über das Telekommunikations- bzw. Datennetz (1) separate Verbindungen zu dem Objekt (2) und der Servicezentrale (4) aufbaut und die Verbindung zur Servicezentrale nach Übertragung der Kenndaten des Objektes zu dieser wieder abbaut.

7. Verfahren nach einem der vorangehenden Ansprüche,
**dadurch gekennzeichnet, daß**
die Servicestelle (3', 5') nach Aufbau der Verbindung zur Servicezentrale (4) Identifizierungs- und wahlweise Authentisierungsdaten überträgt,
diese Identifizierungs- bzw. Authentisierungsdaten bei der Servicezentrale geprüft werden und
der Start oder Ablauf des Verfahrens vom Ergebnis dieser Prüfung abhängig ist.

8. Verfahren nach einem der vorangehenden Ansprüche,
**dadurch gekennzeichnet, daß**
in der Servicezentrale (4) eine Verschlüsselung und/oder Protokollierung des Datenverkehrs zur Verfahrensdurchführung ausgeführt wird.

9. Verfahren nach einem der vorangehenden Ansprüche,
**dadurch gekennzeichnet, daß**
im wesentlichen sämtliche betreuungsrelevanten Objektdaten ausschließlich bei der Servicezentrale (4) gespeichert sind und verwaltet werden.

10. Servicesystem zur Betreuung eines an ein Telekommunikations- bzw. Datennetz (1) angeschlossenen Objektes (2), insbesondere zum Konfigurieren eines Telekommunikationsoder Datenendgerätes bzw. einer Telekommunikations- oder Datenverarbeitungsanlage oder zum Eingeben oder Ändern von Daten oder Programmen, durch eine ebenfalls an das Telekommunikations- bzw. Datennetz angeschlossene Servicestelle (3', 5') unter Mitwirkung einer Servicezentrale (4), in der Daten zum Objekt und zum Betreuungsvorgang verwaltet und/oder bearbeitet werden,
**dadurch gekennzeichnet, daß**
die Servicestelle (3', 5') und die Servicezentrale (4) während der Verfahrensdurchführung über das Telekommunikations- bzw. Datennetz (1) mit dem Objekt (2) verbunden sind.

11. Servicesystem nach Anspruch 10,
**dadurch gekennzeichnet, daß**
die Servicestelle (3', 5') über die als Vermittlung wirkende Servicezentrale (4) mit dem Objekt (2) verbunden bleibt.

12. Servicesystem nach Anspruch 10 oder 11,
**dadurch gekennzeichnet, daß** mehrere Servicestellen (3', 5') gleichzeitig, insbesondere über die Servicezentrale (4) als Vermittlungsstelle, mit dem Objekt (2) verbunden sind (14 - 16).

13. Servicesystem nach Anspruch 10 oder 12,
**dadurch gekennzeichnet, daß**
die Servicestelle (3', 5') oder Servicestellen und die Servicezentrale (4) über voneinander unabhängige Verbindungen (14 - 16) mit dem Objekt verbunden sind.

14. Servicesystem nach einem der Ansprüche 10 bis 13,
**dadurch gekennzeichnet, daß**
der Servicezentrale (4) eine Objektdatenbasis (40) zugeordnet ist, in der im wesentlichen sämtliche betreuungsrelevanten Objektdaten gespeichert sind und verwaltet werden.

15. Servicesystem nach einem der Ansprüche 10 bis 14,
**dadurch gekennzeichnet, daß**
die Servicezentrale mehrere unterschiedliche Standard-Schnittstellen zur Verbindung mit Objekten verschiedenen Typs aufweist, insbesondere ein Modem zur durchschaltevermittelten Verbindung mit einem Telekommunikations-Endgerät oder einer Telekommunikationsanlage über eine analoge Festnetzleitung und/oder eine ISDN-Karte zur durchschaltevermittelten Verbindung mit einem Telekommunikations-Endgerät oder einer Telekommunikationsanlage über eine digitale Festnetzleitung und eine TCP/IP- oder WAP-Schnittstelle zur paketvermittelten Verbindung mit einem Daten- oder Mobilfunk-Endgerät bzw. einer Datenverarbeitungsanlage über ein digitales Daten- oder Mobilfunknetz.

16. Servicesystem nach einem der Ansprüche 10 bis 15,
**dadurch gekennzeichnet, daß**
die Servicezentrale (4) einen Objekt-Kenndatenspeicher zur Speicherung von zugriffsrelevanten Kenndaten von zu betreuenden Objekten (2) sowie eine erste Kenndaten-Prüfstufe (43) aufweist, welche empfangene Kenndaten des Objektes mit den gespeicherten Kenndaten vergleicht und im Ergebnis der Prüfung eine Vermittlungssteüereinrichtung (45) zur Herstellung oder Sperrung einer Verbindung zu dem Objekt ansteuert.

17. Servicesystem nach einem der Ansprüche 10 bis 16,
**dadurch gekennzeichnet, daß**
die Servicezentrale (4) einen Servicestellen-Kenndatenspeicher zur Speicherung von Identifizierungs- und wahlweise Authentisierungsdaten von an das Telekommunikations- bzw. Datennetz angeschlossenen Servicestellen (3', 5') und eine zweite Kenndaten-Prüfstufe (44) aufweist, welche empfangene Identifizierungs- bzw. Authentisierungsdaten der Servicestelle mit den gespeicherten Identifizierungs- bzw. Authentisierungsdaten vergleicht und im Ergebnis der Prüfung eine Vermittlungssteuereinrichtung (45) zur Herstellung oder Sperrung einer Verbindung zu dem Objekt ansteuert.

18. Servicesystem nach einem der Ansprüche 10 bis 17,
**dadurch gekennzeichnet, daß**
die Servicezentrale (4) eine Kodier-/Dekodiereinrichtung (46) zur Ver-/Entschlüsselung des Datenverkehrs zwischen der Servicestelle (3', 5') und dem zu betreuenden Objekt (2) aufweist.

19. Servicesystem nach einem der Ansprüche 10 bis 18,
**dadurch gekennzeichnet, daß**
die Servicezentrale (4) eine Protokollierungseinrichtung (47) sowie einen Protokolldatenspeicher (48) zur Protokollierung des Datenverkehrs zwischen der Servicestelle (3', 5') und dem zu betreuenden Objekt (2) und zur Speicherung von Protokolldaten aufweist.

20. Servicesystem nach einem der Ansprüche 10 bis 19,
**dadurch gekennzeichnet, daß**
die Servicezentrale (4) eine Speicherzugriffssteuerung (49) zum Auslesen von Objektdaten aus der Objektdatenbasis (40) und zum Einschreiben von neuen oder geänderten Objektdaten in diese aufweist.

21. Servicesystem nach einem der Ansprüche 10 bis 20,
**dadurch gekennzeichnet, daß**
die Servicestelle (3', 5') mindestens ein Servicewerkzeug (32) aufweist, welches insbesondere unter einer interaktiven Benutzeroberfläche gehandhabt wird und zur Steuerung einer Mehrzahl von Betreuungswerkzeugen (33a bis 33d) zur Lösung spezifischer Betreuungsaufgaben ausgebildet ist.

22. Servicesystem nach Anspruch 21,
**dadurch gekennzeichnet, daß** mindestens einige Betreuungswerkzeuge über eine aktuell aufgebaute Verbindung von der Servicezentrale (4) an die Servicestelle (3', 5') übertragen oder seitens der Servicezentrale in der Servicestelle aktualisiert werden.

23. Servicesystem nach Anspruch 21 oder 22,
**dadurch gekennzeichnet, daß**
das Servicewerkzeug (32) zur direkten Datenübermittlung von der bzw. zu der Objektdatenbasis bei der Servicezentrale über deren Speicherzugriffssteuerung ausgebildet ist.

24. Servicesystem nach einem der Ansprüche 10 bis 22,
**gekennzeichnet durch**
eine Mehrzahl von Servicestellen (3', 5'), die insbesondere über eine einheitliche, standardisierte Benutzeroberfläche (31) verfügen.

25. Servicesystem nach Anspruch 24,
**dadurch gekennzeichnet, daß**
die standardisierte Benutzeroberfläche ein Standard-Internet-Browser (31) zur Datenkommunikation im HTML- und/oder WML-Format ist.
